# EUROPÄISCHE PATENTSCHRIFT

(11) **EP 1 837 530 B1**
(45) Veröffentlichungstag und Bekanntmachung des Hinweises auf die Patenterteilung: **20.03.2013**
(21) Anmeldenummer: 07005876.3
(22) Anmeldetag: 21.03.2007
(51) Int. Cl.: F15B 15/18

(54) **Betätigungsvorrichtung**
Actuation device
Dispositif d'actionnement

(30) Priorität: 21.03.2006 DE 102006012986
(43) Veröffentlichungstag der Anmeldung: 26.09.2007
(73) Patentinhaber: Liebherr-Aerospace Lindenberg GmbH, 88161 Lindenberg/Allgäu (DE)
(72) Erfinder: Bildstein, Markus, 87534 Oberstaufen (DE); Schmelz, Klaus, 88167 Grünenbach (DE); Kegel, Philipp, 88178 Heimenkirch (DE)
(74) Vertreter: Thoma, Michael

(56) Entgegenhaltungen:
- EP-A1- 1 179 677
- EP-A1- 1 306 560
- JP-A- 9 088 807
- US-A- 4 529 362

## Beschreibung

Die vorliegende Erfindung betrifft eine Betätigungsvorrichtung zur Betätigung einer Stellfläche eines Luftfahrzeugs wie Höhenruder, Seitenruder und dergleichen, eines Flugzeugfahrwerks oder eines anderen Luft- oder Landfahrzeugstellglieds, mit einem elektrohydraulischen Aktuator, der einen Stellzylinder, eine Pumpe zur Druckfluidbeaufschlagung des Stellzylinders sowie einen Elektromotor zur Betätigung der Pumpe aufweist, wobei der Elektromotor eine Flüssigkeitskühlung aufweist.

Bei Flugzeugen werden Stellglieder wie Höhen- oder Querruder häufig mittels eines Hydraulikzylinders betätigt, der an eine zentrale Hydraulikversorgung über entsprechende Hydraulikleitungen angeschlossen ist. Bei einem solchen zentralen Versorgungssystem sind jedoch je nach Lage des zu betätigenden Stellzylinders lange Versorgungsleitungen notwendig, die ein entsprechendes Hydraulikvolumen beinhalten und hohes Gewicht mit sich bringen. Zudem muss ein solches zentrales Hydrauliksystem eine Vielzahl von Ventilen beinhalten, um die diversen Stellzylinder mit der jeweils benötigten Hydraulikmenge zu versorgen, was zu komplexen hydraulischen Systemen führt.

Im Gegensatz zu einem solchen Zentralversorgungssystem wurden bereits dezentrale Stellantriebe vorgeschlagen, die mit Hilfe sogenannter elektrohydraulischer Aktuatoren arbeiten, bei denen der jeweilige Stellzylinder von einer dezentralen Pumpe beaufschlagbar ist, die von einem zugehörigen Elektromotor antreibbar ist. Dabei sind der Elektromotor sowie die Pumpe und ggf. auch der Stellzylinder zu einer Baueinheit zusammengefasst, so dass lange Hydraulikleitungen zwischen Pumpe und Stellzylinder eingespart werden können. Einen solchen elektrohydraulischen Aktuator zeigt beispielsweise die US 4,630,441, bei der der Elektromotor, die Pumpe und der Stellzylinder des Aktuators in ein gemeinsames Gehäuse integriert sind. Die Pumpe ist dabei als Axialkolbenpumpe ausgebildet, die von dem Elektromotor in entgegengesetzte Richtungen antreibbar ist, um je nach Drehrichtung des Motors entgegengesetzte Stellbewegungen des Stellzylinders erzeugen zu können. Die Druckkammern des Stellzylinders sind dabei mit den Druckanschlüssen der Pumpe verbunden.

Bei solchen elektrohydraulischen Aktuatoreinheiten treten bisweilen Hitze- und Temperaturprobleme auf, insbesondere am Elektromotor. Die WO 98/11358 schlägt hierzu vor, einen flüssigkeitsgekühlten Motor zu verwenden, in den ein Teil des von der Pumpe bereitgestellten Hydraulikfluids eingeleitet wird, um den Motor zu kühlen. Hierzu ist in der Druckleitung zwischen der Pumpe und dem Stellzylinder eine Ventilanordnung vorgesehen, die einen Teil des Druckfluids abzweigt und in den Elektromotor einleitet, um diesen zu kühlen. Diese zusätzliche Ventilanordnung ist jedoch wieder eigens anzusteuern und verkompliziert die Bauweise des Aktuators, zudem bringt sie zusätzliches Gewicht mit sich, was gerade im Luft- und Raumfahrtbereich vermieden werden soll. Zudem kann das Abzweigen des Druckfluids zu Kühlungszwecken die Effizienz des Stellantriebs beeinträchtigen.

Die EP 1 306 560 A1 betrifft eine hydraulische Betätigungsvorrichtung für ein Luftfahrzeug, mittels derer insbesondere Turbinenschaufeln verstellt werden können. Eine Kühlung des Elektromotors dieser Betätigungsvorrichtung erfolgt mittels am Gehäuse angebrachter Kühlrippen.

Die JP 09-88807 betrifft eine hydraulische Betätigungseinheit, die derart ausgelegt ist, dass ein Schaden an der Pumpe der Betätigungseinheit durch kontaminiertes bzw. verschmutztes Öl verhindert werden soll und wobei der Elektromotor durch Öl kühlbar ist.

Ähnliche Vorrichtungen sind auch aus US 4 529 362 und EP 1 179 677 A1 bekannt.

Der vorliegenden Erfindung liegt hiervon ausgehend die Aufgabe zugrunde, eine verbesserte Betätigungsvorrichtung der eingangs genannten Art zu schaffen, die Nachteile des Standes der Technik vermeidet und letzteren in vorteilhafter Weise weiterbildet. Vorzugsweise soll eine einfache, jedoch nichtsdestotrotz effiziente Kühlung des Elektromotors des elektrohydraulischen Aktuators erreicht werden.

Erfindungsgemäß wird diese Aufgabe durch eine Betätigungsvorrichtung gemäß Anspruch 1 gelöst. Bevorzugte Ausgestaltungen der Erfindung sind Gegenstand der abhängigen Ansprüche.

Es wird also vorgeschlagen, den Elektromotor mit dem Druckfluid zu kühlen, das eigentlich zur Betätigung des Stellzylinders vorgesehen ist, hierfür jedoch nicht Druckfluid aus dem Druckfluidverbindungskreis zwischen Pumpe und Stellzylinder abzuzweigen, sondern den Leckagestrom der Pumpe zu nutzen. Erfindungsgemäß wird zur Kühlung des Elektromotors der Leckagestrom der Pumpe über einen Leckagekanal durch den Elektromotor hindurchgeführt. Anders als im Stand der Technik wird nicht der Nutzstrom bzw. Nutzkreis zwischen Pumpe und Stellzylinder angezapft, um den Elektromotor zu kühlen, sondern der sonst nutzlose, nichtsdestotrotz jedoch durch Undichtigkeiten und dergleichen anfallende Leckagestrom der Pumpe genutzt.

Insbesondere wird dabei auf Ventile verzichtet, wie sie der Stand der Technik verwendet, um einen Teil des Druckfluids aus dem Druckverbindungskreis zwischen Pumpe und Stellzylinder abzuzweigen und in den Motor zu leiten. In Weiterbildung der Erfindung wird der Leckagestrom der Pumpe ohne Ventile in den und durch den Elektromotor geführt. Dies ermöglicht nicht nur eine besonders einfache und damit kostengünstige Lösung, sondern baut überdies sehr leicht, da die Flüssigkeitskühlung für den Elektromotor ohne zusätzliche Bauteile, wie Ventile, auskommt.

Vorteilhafterweise sind die Pumpe und der Elektromotor in einem gemeinsamen, ggf. mehrteiligen Gehäuse aufgenommen, in dem der vorgenannte Leckagekanal ausgebildet ist, der ein Pumpengehäuseteil mit einem Motorgehäuseteil verbindet. Die Pumpe und der Elektromotor sowie ggf. auch der Stellzylinder sind vorteilhafterweise zu einer Baueinheit zusammengefasst, wobei der Leckagestrom aus dem Pumpengehäuseteil ohne zusätzliche externe Leitungen unmittelbar in den Motorgehäuseteil eingeleitet wird.

Vorteilhafterweise wird die Einleitung des Leckagestroms in den Elektromotorgehäuseteil dadurch erreicht, dass eine Antriebswelle des Elektromotors ohne Wellendichtungen in den Pumpengehäuseteil geführt ist. Insbesondere kann der Elektromotor einen Antriebswellenabschnitt besitzen, der stirnseitig aus dem Motorgehäuseabschnitt herausragt und in den Pumpengehäuseteil hineingeführt ist, wo die Pumpe mit der genannten Antriebswelle gekuppelt ist, um die Pumpe anzutreiben. Im Bereich des Wellendurchtritts bzw. Übergangs zwischen dem Motorgehäuseteil und dem Pumpengehäuseteil kann ein wellendichtungsloser Ringspalt zwischen der Antriebswelle und dem entsprechenden Gehäuseteil vorgesehen sein, über den der Leckagestrom aus der Pumpe in den Elektromotor geführt wird.

Grundsätzlich kann die Pumpe des elektrohydraulischen Aktuators verschieden ausgebildet sein. Nach einer vorteilhaften Ausführung der Erfindung ist eine Axialkolbenpumpe vorgesehen, deren Axialkolben über eine Schrägscheibe angetrieben werden, die in einem Schrägscheibenraum aufgenommen ist. Die in diesem Schrägscheibenraum auftretende Leckage der Pumpe wird vorteilhafterweise zur Kühlung des Elektromotors genutzt. Der Schrägscheibenaufnahmeraum der Pumpe ist über den vorgenannten Leckagekanal mit dem Elektromotor strömungsverbunden.

In Weiterbildung der Erfindung ist der Leckagestrom aus der Pumpe über die Lager geführt, mittels derer die Antriebswelle bzw. der Rotor des Elektromotors drehbar relativ zu dem Stator des Motors, insbesondere an dem Motorgehäuse, gelagert ist. Der Leckagestrom kann dabei durch einen Lagerspalt und/oder durch einen Wälzkörperkäfig hindurch geleitet werden. Hierdurch können einerseits eigens ausgebildete Leckagestromkanäle eingespart werden. Gleichzeitig wird das Drehlager des Elektromotors geschmiert.

Die Leckagestromführung innerhalb des Elektromotors kann grundsätzlich verschieden gestaltet sein. Nach einer vorteilhaften Ausführung der Erfindung besitzt der Elektromotor eine Rotorkammer, in der der Rotor des Motors aufgenommen ist, sowie eine davon fluiddicht getrennte Statorkammer, in der der mit dem Rotor zusammenwirkende Stator aufgenommen ist. Vorzugsweise wird der Leckagestrom durch die von der Statorkammer fluiddicht abgetrennte Rotorkammer geleitet. Der Rotor läuft im Nassen, während der Stator trocken angeordnet ist. Besonders vorteilhaft ist diese Anordnung eines nasslaufenden Rotors dann, wenn der Rotor innenliegend und der Stator außenliegend angeordnet ist.

Insbesondere kann der Elektromotor eine Dichtungshülse aufweisen, die sich zwischen dem Rotor und dem Stator des Elektromotors erstreckt und die Wicklung des Motors fluiddicht gegenüber dem Leckagestrom abdichtet. Der genannte Leckagestrom wird vorteilhafterweise stirnseitig in die genannte Dichtungshülse eingeleitet und stirnseitig auf der gegenüberliegenden Seite wieder hinausgeleitet.

Die genannte Dichtungshülse kann radial an dem Stator und/oder einem Motorgehäuseabschnitt gelagert sein und beispielsweise über eine Ringdichtung abgedichtet sein.

In Weiterbildung der Erfindung kann der Elektromotor vorzugsweise auf der der Pumpe gegenüberliegenden Seite mit einem Drehwertgeber verbunden sein, der die Drehstellung des Elektromotors präzise angibt. Vorteilhafterweise ist dabei ein Resolver mit einem innenliegenden Rotor und einem außenliegenden Stator vorgesehen, die jeweils entsprechende Wicklungen aufweisen können. In Weiterbildung der Erfindung ist der Rotor nasslaufend angeordnet und in einer Rotorkammer aufgenommen, die fluiddicht gegenüber einer Statorkammer abgedichtet ist. Hierbei kann wiederum eine Dichtungshülse vorgesehen sein, die zwischen Rotor und Stator angeordnet ist, vorteilhafterweise am Stator radial gelagert ist und die Statorkammer von der Rotorkammer fluiddicht trennt. Soweit der nasslaufende Rotor des Resolvers eine Wicklung aufweist, kann in Weiterbildung der Erfindung die Wicklung fluiddicht gekapselt sein.

In Weiterbildung der Erfindung umfasst der Elektromotor einen Leckageabfluss, der mit einem Reservoir der elektrohydraulischen Aktuatoreinheit verbindbar ist. Das genannte Reservoir ist dabei vorteilhafterweise derart ausgebildet, dass der in das Reservoir geleitete Leckagestrom an einer Gehäusewand des Reservoirs, insbesondere einer Außenwand, entlanggeführt wird, wodurch ein guter Wärmeübergang und eine gute Wärmeabfuhr erreicht wird. Insbesondere kann das Reservoir einen Faltenbalg aufweisen, der in einem Reservoirgehäuse aufgenommen ist. Der Leckagestrom wird dabei außerhalb des Faltenbalgs zwischen dem Reservoirgehäuse und dem Faltenbalg eingespeist und/oder gespeichert, so dass über die Reservoirgehäusewand eine gute Wärmeabfuhr gewährleistet ist.

Die Erfindung wird nachfolgend anhand eines bevorzugten Ausführungsbeispiels und zugehöriger Zeichnungen näher erläutert. In den Zeichnungen zeigen:
- Fig.1:: eine perspektivische, schematische Darstellung des elektrohydraulischen Aktuators einer Betätigungsvorrichtung zur Verwendung in Luft-bzw. Raumfahrzeugen nach einer vorteilhaften Ausführung der Erfindung, wobei ein Stellzylinder der Aktuatoreinheit zwischen einer Elektromotor-/Pumpeneinheit und einer Reservoireinheit der Aktuatoreinheit angeordnet ist,
- Fig. 2:: einen Längsschnitt durch die Elektromotor-/Pumpeneinheit des elektrohydraulischen Aktuators aus Fig. 1,
- Fig. 3:: einen Längsschnitt durch das Faltenbalgreservoir des elektrohydraulischen Aktuators aus Fig. 1, und
- Fig. 4:: einen ausschnittsweisen Längsschnitt durch die Elektromotor/Pumpeneinheit nach einer alternativen Ausführung im Bereich einer Resolvereinheit.

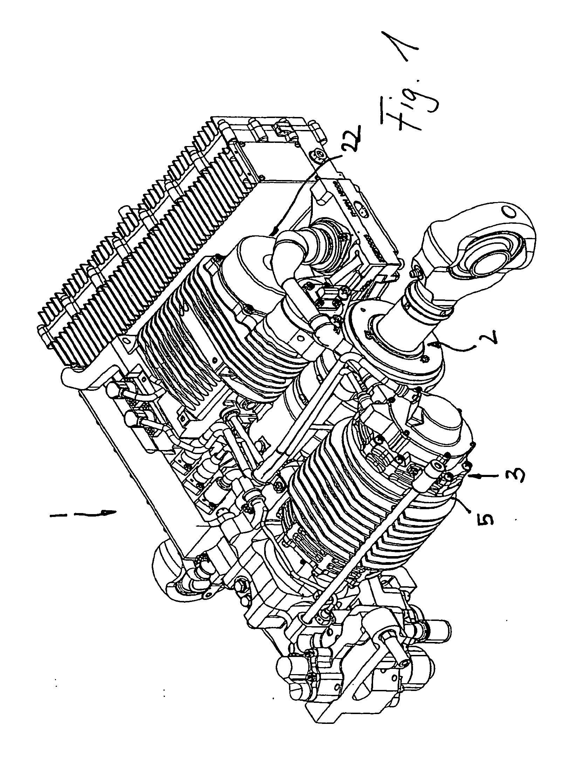

Bei dem in Figur 1 gezeigten elektrohydraulischen Aktuator 1 sind ein doppeltwirkender Stellzylinder 2, eine mit dem Stellzylinder 2 wirkverbundene Pumpe 3, ein die Pumpe 3 antreibender Elektromotor 4 sowie ein Hydraulikreservoir 5 zu einer Baueinheit zusammengefasst. Die Druckanschlüsse der Pumpe 3 sind dabei mit den Druckkammern des Stellzylinders 2 in an sich bekannter Weise verbunden, so dass durch Betätigung des Elektromotors 4, der die Pumpe 3 entsprechend antreibt, der Stellzylinder 2 hin- und herbewegbar ist.

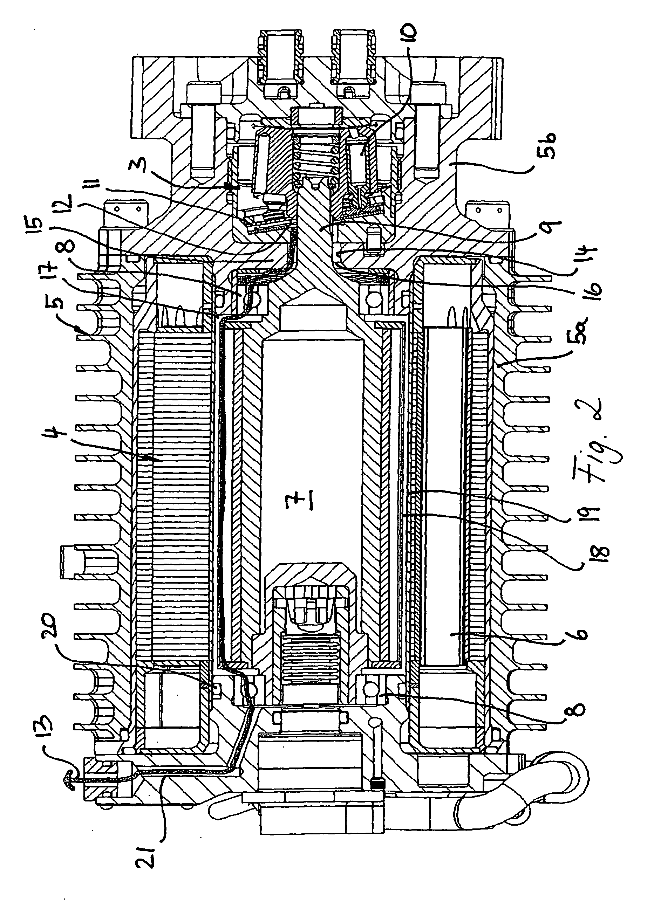

Wie Figur 2 zeigt, sind der Elektromotor 4 sowie die Pumpe 3 in einem gemeinsamen Gehäuse 5 angeordnet. Der Elektromotor 4 umfasst einen außenliegenden, ringförmigen Stator 6, in dem sich der Rotor 7 des Elektromotors 4 erstreckt. Der genannte Rotor 7 ist in der gezeichneten Ausführung an seinen gegenüberliegenden Enden mittels zweier Drehlager 8 in Form von Wälzlagern an entsprechenden Gehäuseabschnitten gelagert. Der Rotor 7 bildet dabei an seinem einen Ende einen Antriebswellenabschnitt 9, der sich stirnseitig aus dem Motorgehäuseteil 5a hinaus und in den Pumpengehäuseteil 5b hinein erstreckt. Auf dem wellenstumpfförmigen Antriebswellenabschnitt 9 sitzt die Pumpe 3, die als Axialkolbenpumpe ausgebildet ist, deren Kolben 10 mittels einer Schrägscheibe 11 axial angetrieben werden, die in einem Schrägscheibenaufnahmeraum 12 angeordnet ist.

In dem genannten Schrägscheibenaufnahmeraum 12 tritt ein Leckagestrom auf, der mit den Pfeilen 13 gekennzeichnet ist. Der Schrägscheibenaufnahmeraum 12 bildet insofern den Ausgangspunkt des Leckagestroms 13, mittels dessen der Elektromotor 4 gekühlt wird.

Der vorgenannte Antriebswellenabschnitt 9, mit dem die Pumpe 3 verbunden ist, erstreckt sich durch die Durchtrittsaufnehmung 14 in der Stegförmigen Gehäusewandung 15 ohne eine Wellendichtung. Der Ringspalt 16 zwischen dem Antriebswellenabschnitt 9 und der Gehäusewandung 15, der den Pumpengehäuseteil 5b mit dem Motorgehäuseteil 5a verbindet, bildet einen Teil des Leckagekanals 17, der die Pumpe 3 mit dem Elektromotor 4 verbindet.

Wie Figur 2 zeigt, kann der über den Ringspalt 16 in den Motorgehäuseteil 5a eintretende Leckagestrom 13 durch die vorgenannten Lager 8, mit denen der Rotor 7 drehbar gelagert ist, in einen ringförmigen Motorinnenraum zwischen dem Rotor 7 und dem Stator 6 eintreten. Hierdurch werden gleichzeitig die genannten Lager 8 geschmiert.

Der vorgenannte Motorinnenraum 18 bildet dabei die Rotorkammer, in der der genannte Rotor 7 drehbar aufgenommen ist und der nach außen hin zu dem Stator 6 bzw. der den Stator 6 aufnehmenden Statorkammer durch eine Hülse 19 fluiddicht abgedichtet ist. Die Dichtungshülse 19 sitzt dabei in der Innenausnehmung des Stators 6 und ist mit ihren Enden auf die gegenüberliegenden Lagerflansche des Gehäuses 5 aufgeschoben, an denen die vorgenannten Lager 8 abgestützt sind. Über Ringdichtungen 20 ist die Hülse 19 gegenüber dem Motorinnenraum 18 bzw. der Rotorkammer fluiddicht abgedichtet.

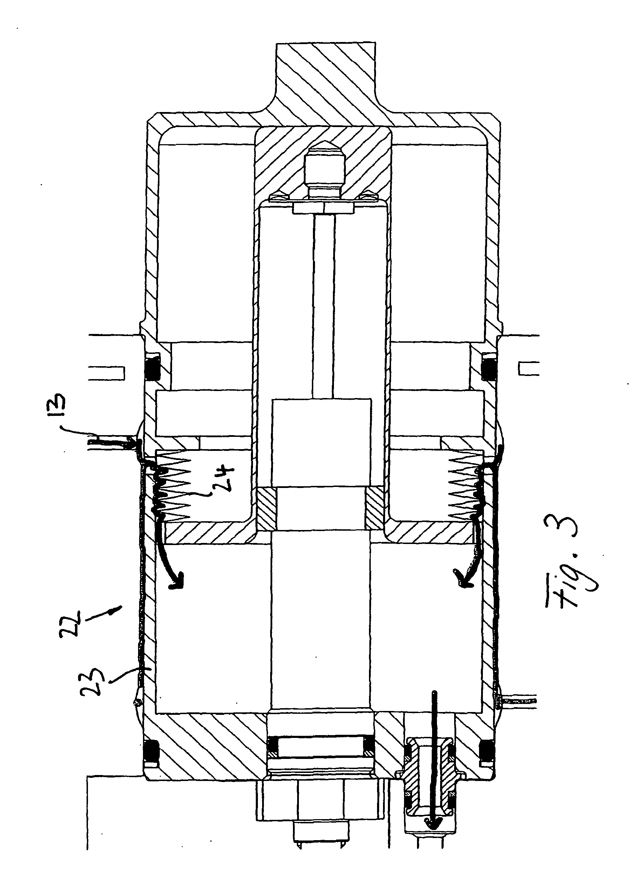

An dem der Pumpe 3 gegenüberliegenden Ende des Rotors 7 wird der Leckagestrom 13 wiederum durch das Lager 8 hindurchgeführt und über einen Leckageabflusskanal 21 aus dem Motorgehäuseteil 5a herausgeführt. Der genannte Leckageabflusskanal 21 ist über einen nicht eigens gezeigten Verbindungskanal mit einem Reservoir 22 verbunden, wie es Figur 3 zeigt. Das genannte Reservoir 22 umfasst ein Reservoirgehäuse 23 (vgl. Figur 1), in dem ein gasbefüllter, volumenveränderbarer Faltenbalg 24 aufgenommen ist. Das Reservoir 22 ist dabei derart ausgebildet, dass das eingeleitete Fluid an der Gehäusewand des Reservoirgehäuses 23 entlang geleitet wird, wodurch der Wärmeaustausch mit der Umgebung verbessert und der warme Volumenstrom rasch abgekühlt werden kann. Das in das Reservoir 22 eingeleitete Fluid wird außerhalb des genannten Faltenbalgs 24 zwischen dem Faltenbalg 24 und dem Reservoirgehäuse 23 eingeleitet bzw. gespeichert.

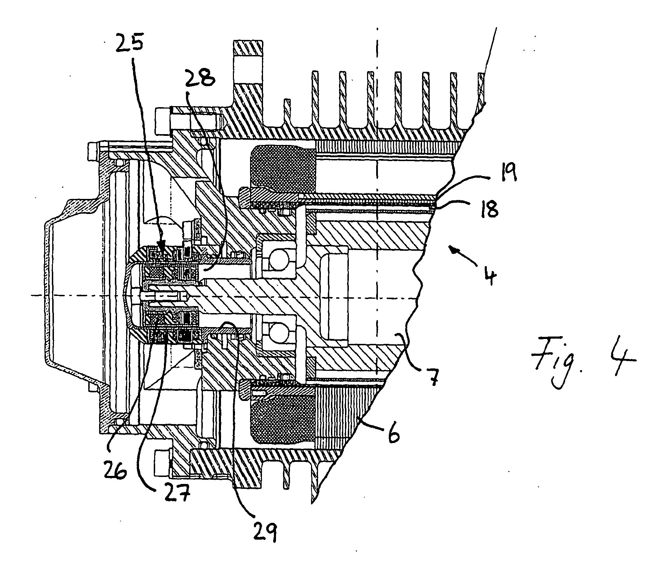

Figur 4 zeigt eine Ausführung eines Drehwertgebers 25, der an dem der Pumpe 3 gegenüberliegenden Ende des Rotors 7 angeordnet sein kann. Bei dieser Ausführung ist als Drehwertgeber 25 ein Resolver mit einem innenliegenden Rotor 26 sowie einem diesen ringförmig umgebenden Stator 27 vorgesehen, die jeweils entsprechende Wicklungen aufweisen können. Der Rotor 26 ist dabei nasslaufend angeordnet, d.h. er ist in einer Rotorkammer 28 aufgenommen, die mit dem vorgenannten ringförmigen Motorinnenraum 18 in Strömungsverbindung steht, über den der Leckagestrom zur Motorkühlung geleitet wird. Der Rotor 26 bzw. seine Rotorwicklung ist gekapselt und sitzt auf einem mit dem Rotor 7 verbundenen Wellenstumpf. Die Rotorkammer 28 ist dabei über eine Hülse bzw. einen Topf 29 von dem Stator 27 des Resolvers fluiddicht abgetrennt. Der Dichtungstopf 29 sitzt in dem Gehäuseabschnitt, an dem das Lager 8 zur drehbaren Lagerung des Rotors 7 abgestützt ist.

## Patentansprüche

1. Betätigungsvorrichtung zur Betätigung einer Stellfläche eines Luftfahrzeugs wie Höhenruder, Seitenruder und dergleichen, eines Flugzeugfahrwerks oder eines anderen Luft- oder Landfahrzeugstellglieds, mit einem elektrohydraulischen Aktuator (1), der einen Stellzylinder (2), eine Pumpe (3) zur Druckfluidbeaufschlagung des Stellzylinders (2) sowie einen Elektromotor (4) zur Betätigung der Pumpe (3) aufweist, wobei der Elektromotor (4) eine Flüssigkeitskühlung aufweist, und wobei die Betätigungsvorrichtung einen Leckagekanal (17) aufweist,
**dadurch gekennzeichnet, dass** zur Kühlung des Elektromotors (4), welcher eine Rotorkammer in der der Motor des Motors aufgenommen ist und eine davon fluiddicht getrennte Statorkammer in der der Stator des Motors aufgenommen ist aufweist, ein Leckagestrom (13) der Pumpe (3) über den Leckagekanal (17), welcher sich zum Teil entlang der Rotorkammer erstreckt, durch den Elektromotor (4) hindurchgeführt ist.

2. Betätigungsvorrichtung nach dem vorhergehenden Anspruch, wobei der Leckagestrom (17) frei von Ventilen in den und durch den Elektromotor (4) geführt ist.

3. Betätigungsvorrichtung nach einem der vorhergehenden Ansprüche, wobei der Elektromotor (4) eine Dichtungshülse (19) aufweist, die sich zwischen dem Rotor und dem Stator des Elektromotors (4) erstreckt und die Wicklung des Elektromotors (4) fluiddicht gegenüber dem Leckagestrom (13) abdichtet.

4. Betätigungsvorrichtung nach dem vorhergehenden Anspruch, wobei der Leckagestrom (13) innerhalb der Dichtungshülse (19) von einer Rotorstirnseite zur gegenüberliegenden Rotorstirnseite des Elektromotors (4) geführt ist.

5. Betätigungsvorrichtung nach einem der beiden vorhergehenden Ansprüche, wobei die Rotorkammer (18) vorzugsweise innenliegend angeordnet ist, wobei die Dichtungshülse (19) radial an dem außenliegenden Stator gelagert ist.

6. Betätigungsvorrichtung nach einem der vorhergehenden Ansprüche, wobei die Pumpe (3) und der Elektromotor (4) in einem gemeinsamen Gehäuse (5), in dem der Leckagekanal (17) ausgebildet ist, aufgenommen sind, wobei der Leckagekanal (17) einen Pumpengehäuseteil (5b) mit einem Motorgehäuseteil (5a) verbindet.

7. Betätigungsvorrichtung nach dem vorhergehenden Anspruch, wobei ein Antriebswellenabschnitt (9) des Elektromotors (4) wellendichtungslos in den Pumpengehäuseteil (5b) geführt ist.

8. Betätigungsvorrichtung nach einem der Ansprüche 6 oder 7, wobei die Pumpe (3) mit einem Antriebswellenabschnitt verbunden ist, der stirnseitig aus dem Motorgehäuseteil (5a) heraus und in den Pumpengehäuseteil (5b) hineingeführt ist, wobei der Leckagestrom (13) durch einen Ringspalt (16) zwischen dem Antriebswellenabschnitt (9) und dem Pumpen- und/oder Motorgehäuseteil (5b, 5a) aus dem Pumpengehäuseteil (5b) in den Motorgehäuseteil (5a) geführt ist.

9. Betätigungsvorrichtung nach einem der vorhergehenden Ansprüche, wobei der Leckagestrom (13) durch zumindest ein Drehlager (8) des Elektromotors (4) hindurchgeführt ist.

10. Betätigungsvorrichtung nach einem der vorhergehenden Ansprüche, wobei ein Drehwertgeber (25) an den Elektromotor (5) angeschlossen, insbesondere in den Elektromotor (4) integriert ist.

11. Betätigungsvorrichtung nach dem vorhergehenden Anspruch, wobei der Drehwertgeber (25) einen nasslaufenden Rotor (26) aufweist, der über eine Dichtungshülse und/oder einen Dichtungstopf (29) fluiddicht von einem Stator (27) des Drehwertgebers (25) getrennt ist.

12. Betätigungsvorrichtung nach einem der beiden vorhergehenden Ansprüche, wobei der Drehwertgeber (25) mit einem Antriebswellenabschnitt des Elektromotors (4) verbunden ist, der wellendichtungslos aus dem Motorgehäuseteil (5a) herausgeführt ist und/oder wobei die den Rotor (26) des Drehwertgebers (25) aufnehmende Rotorkammer (28) mit dem Motorinnenraum (18), durch den der Leckagestrom geführt ist, strömungsverbunden ist.

13. Betätigungsvorrichtung nach einem der vorhergehenden Ansprüche, wobei der Elektromotor (4) einen Leckageabfluss (21) aufweist, der mit einem Reservoir (22) verbunden ist.

14. Betätigungsvorrichtung nach dem vorhergehenden Anspruch, wobei das Reservoir (22) derart ausgebildet ist, dass der in das Reservoir (22) geleitete Leckagestrom (13) an einer Gehäusewand des Reservoirs (22) entlanggeführt ist.

15. Betätigungsvorrichtung nach dem vorhergehenden Anspruch, wobei das Reservoir (22) einen Faltenbalg (24) aufweist, der in einem Reservoirgehäuse (23) aufgenommen ist, wobei der Leckagestrom (13) außerhalb des Faltenbalgs (24) zwischen dem Reservoirgehäuse (23) und dem Faltenbalg (24) einspeisbar und/oder speicherbar ist.

16. Betätigungsvorrichtung nach einem der vorhergehenden Ansprüche, wobei die Pumpe (3) als Axialkolbenpumpe ausgebildet ist, die eine in einem Schrägscheibenaufnahmeraum (12) angeordnete Schrägscheibe (11) aufweist, wobei der genannte Schrägscheibenaufnahmeraum (12) über den Leckagekanal (17) mit dem Elektromotor (4) verbunden ist.

## Claims

1. Actuation device for actuating an adjustment surface of an aircraft such as pitch elevator, side rudder and suchlike, of landing gear or another aircraft or surface vehicle actuator, having an electrohydraulic actuator (1), which has a servo control cylinder (2), a pump (3) for pressure fluid action on the servo control cylinder (2), as well as an electric motor (4) for the actuation of the pump (3), wherein the electric motor (4) has liquid cooling and wherein the actuation device has a leak passage (17),
**characterised in that**,
to cool the electric motor (4), which has a rotor chamber, in which the rotor of the motor is contained, and a stator chamber, in which the stator of the motor is contained, separated in a fluid-sealed manner therefrom, a leakage flow (13) of the pump (3) is fed through the electric motor (4) via the leak passage (17), which extends in part along the rotor chamber.

2. Actuation device according to the preceding claim, wherein the leakage flow (13) is guided into and through the electric motor (4) without any valves.

3. Actuation device according to one of the preceding claims, wherein the electric motor (4) has a sealing sleeve (19), which extends between the rotor and the stator of the electric motor (4) and which seals off the coil of the electric motor (4) in a fluid-sealed manner from the leakage flow (13).

4. Actuation device according to the preceding claim, wherein the leakage flow (13) is guided within the sealing sleeve (19) from one rotor end face to the opposite rotor end face of the electric motor (4).

5. Actuation device according to one of the two preceding claims, wherein the rotor chamber (18) is preferably arranged internally, wherein the sealing sleeve (19) is mounted radially on the external stator.

6. Actuation device according to one of the preceding claims, wherein the pump (3) and the electric motor (4) are contained in a mutual housing (5), in which the leak passage (17) is designed, wherein the leak passage (17) connects a pump housing section (5b) to a motor housing section (5a).

7. Actuation device according to the preceding claim, wherein a driveshaft section (9) of the electric motor (4) is guided into the pump housing section (5b) without any shaft seals.

8. Actuation device according to one of claims 6 or 7, wherein the pump (3) is connected to a driveshaft section, which is guided frontally out of the motor housing section (5a) and into the pump housing section (5b), wherein the leakage flow (13) is guided through an annular gap (16) between the driveshaft section (9) and the pump and/or motor housing section (5b, 5a) from the pump housing section (5b) into the motor housing section (5a).

9. Actuation device according to one of the preceding claims, wherein the leakage flow (13) is fed through at least one pivot bearing (8) of the electric motor (4).

10. Actuation device according to one of the preceding claims, wherein a rotary encoder (25) is connected to the electric motor (4), in particular integrated into the electric motor (4).

11. Actuation device according to the preceding claim, wherein the rotary encoder (25) has a wet-running rotor (26), which is separated from a stator (27) of the rotary encoder (25) by a sealing sleeve and/or a sealing cap (29) in a fluid-sealed manner.

12. Actuation device according to one of the two preceding claims, wherein the rotary encoder (25) is connected to a driveshaft section of the electric motor (4), which is guided out of the motor housing section (5a) without any shaft seals and/or wherein the rotor chamber (28) containing the rotor (26) of the rotary encoder (25) is connected for flow to the motor interior (18), through which the leakage flow is guided.

13. Actuation device according to one of the preceding claims, wherein the electric motor (4) has a leakage discharge (21) that is connected to a reservoir (22).

14. Actuation device according to the preceding claim, wherein the reservoir (22) is designed in such a way that the leakage current (13) that is fed into the reservoir (22) is guided along a housing wall of the reservoir (22).

15. Actuation device according to the preceding claim, wherein the reservoir (22) has a bellows (24) contained in a reservoir housing (23), wherein the leakage current (13) outside the bellows (24) can be fed and/or stored between the reservoir housing (23) and the bellows (24).

16. Actuation device according to one of the preceding claims, wherein the pump (3) is designed as an axial piston pump having a swash plate (11) arranged in a swash plate receiving space (12), wherein said swash plate receiving space (12) is connected to the electric motor (4) via the leak passage (17).

## Revendications

1. Dispositif d'actionnement pour l'actionnement d'une surface de réglage d'un véhicule aérien comme une gouverne de profondeur et autres, d'un train d'atterrissage d'avion ou d'un autre organe d'un véhicule aérien ou terrestre, avec un actionneur électrohydraulique (1), qui comprend un vérin (2), une pompe (3) pour l'alimentation en fluide sous pression du vérin (2) ainsi qu'un moteur électrique (4) permettant d'actionner la pompe (3), le moteur électrique (4) comprenant un dispositif de refroidissement à liquide et le dispositif d'actionnement comprenant un canal de fuite (17),
**caractérisé en ce que**, pour le refroidissement du moteur électrique (4), qui comprend une chambre de rotor dans laquelle est logé le rotor du moteur et une chambre de stator, séparée de manière étanche aux fluides de celle-ci, dans laquelle est logé le stator du moteur, un écoulement de fuite (13) de la pompe (3) est guidé par le canal de fuite (17), qui s'étend partiellement le long de la chambre du rotor, à travers le moteur électrique (4).

2. Dispositif d'actionnement selon la revendication précédente, l'écoulement de fuite (17) étant guidé sans soupapes dans le moteur électrique (4) et à travers celui-ci.

3. Dispositif d'actionnement selon l'une des revendications précédentes, le moteur électrique (4) comprenant un manchon d'étanchéité (19) qui s'étend entre le rotor et le stator du moteur électrique (4) et étanchéifie l'enroulement du moteur électrique (4) de manière étanche aux fluides par rapport à l'écoulement de fuite (13).

4. Dispositif d'actionnement selon la revendication précédente, l'écoulement de fuite (13) étant guidé à l'intérieur du manchon d'étanchéité (19) d'un côté frontal du rotor au côté frontal opposé du rotor du moteur électrique (4).

5. Dispositif d'actionnement selon l'une des revendications précédentes, la chambre du rotor (18) étant disposée de préférence à l'intérieur, le manchon d'étanchéité (19) étant logé radialement sur le stator situé à l'extérieur.

6. Dispositif d'actionnement selon l'une des revendications précédentes, la pompe (3) et le moteur électrique (4) étant logés dans un carter commun (5), dans lequel se trouve le canal de fuite (17), le canal de fuite (17) reliant une partie de carter de la pompe (5b) avec une partie de carter du moteur (5a).

7. Dispositif d'actionnement selon la revendication précédente, une partie d'arbre d'entraînement (9) du moteur électrique (4) étant guidé, sans joint d'étanchéité d'arbre, dans la partie de carter du moteur (5b).

8. Dispositif d'actionnement selon l'une des revendications 6 ou 7, la pompe (3) étant reliée avec une partie d'arbre d'entraînement, qui est guidée du côté frontal hors de la partie de carter du moteur (5a) et vers la partie de carter de la pompe (5b), l'écoulement de fuite (13) étant guidé, par une fente annulaire (16) entre la partie d'arbre d'entraînement (9) et la partie de carter de la pompe et/ou du moteur (5b, 5a), hors de la partie de carter de la pompe (5b) vers la partie de carter du moteur (5a).

9. Dispositif d'actionnement selon l'une des revendications précédentes, l'écoulement de fuite (13) étant guidé à travers au moins un palier rotatif (8) du moteur électrique (4).

10. Dispositif d'actionnement selon l'une des revendications précédentes, un capteur de vitesse de rotation (25) étant connecté au moteur électrique (5), plus particulièrement intégré au moteur électrique (4).

11. Dispositif d'actionnement selon la revendication précédente, le capteur de vitesse de rotation (25) comprenant un rotor (26) à fonctionnement humide, séparé de manière étanche aux fluides d'un stator (27) du capteur de vitesse de rotation (25) par un manchon d'étanchéité et/ou d'une cloche d'étanchéité (29).

12. Dispositif d'actionnement selon l'une des revendications précédentes, le capteur de vitesse de rotation (25) étant relié avec une partie d'arbre d'entraînement du moteur électrique (4), qui est guidé sans joint d'étanchéité d'arbre hors de la partie de carter du moteur (5a) et/ou la chambre de rotor (28) logeant le rotor (26) du capteur de vitesse de rotation (25) étant relié par un écoulement avec l'intérieur du moteur (18), à travers lequel l'écoulement de fuite est guidé.

13. Dispositif d'actionnement selon l'une des revendications précédentes, le moteur électrique (4) comprenant une évacuation de fuite (21) reliée à un réservoir (22).

14. Dispositif d'actionnement selon la revendication précédente, le réservoir (22) étant conçu de façon à ce que l'écoulement de fuite (13) guidé dans le réservoir (22) est guidé le long d'une paroi du réservoir (22).

15. Dispositif d'actionnement selon la revendication précédente, le réservoir (22) comprenant un soufflet (24) logé dans un carter de réservoir (23), l'écoulement de fuite (13) pouvant être introduit et/ou accumulé à l'extérieur du soufflet (24) entre le carter du réservoir (23) et le soufflet (24).

16. Dispositif d'actionnement selon l'une des revendications précédentes, la pompe (3) étant conçue comme une pompe à pistons axiaux, qui comprend un disque (11) disposé dans un espace de logement de disque incliné (12), cet espace de logement de disque incliné (12) étant relié avec le moteur électrique (4) par le canal de fuite (17).
